# EUROPÄISCHE PATENTANMELDUNG

(11) **EP 1 319 694 A1**
(43) Veröffentlichungstag der Anmeldung: **18.06.2003**
(21) Anmeldenummer: 02027259.7
(22) Anmeldetag: 06.12.2002
(51) Int. Cl.: C09D 9/00

(54) **Organisches Entlackungsmittel**

(30) Priorität: 15.12.2001 DE 10161846
(71) Anmelder: Henkel Kommanditgesellschaft auf Aktien, 40589 Düsseldorf (DE)
(72) Erfinder: Rehm, Hans-Jörgen, 40724 Hilden (DE); Spei, Brigitte, 40589 Düsseldorf (DE)

(57) **Zusammenfassung**

Verwendung von alkoxylierten Alkylalkoholen mit 8 bis 18 C-Atomen im Alkylrest und mit insgesamt 2 bis 12 Ethylenoxid- und/oder Propylenoxideinheiten pro Molekül als Additiv für Entlackungsmittel auf Basis organischer Lösungsmittel, wobei das Entlackungsmittel weniger als 5 Gew.-% Wasser enthält; entsprechende Entlackungsmittel auf Basis alkoholischer organischer Lösungsmittel; Entlackungsverfahren unter Verwendung dieser Mittel, insbesondere für Nichteisenmetalle.

## Beschreibung

Die Erfindung betrifft ein Mittel und ein Verfahren zum Entlacken von Metalloberflächen, insbesondere von Metalloberflächen aus Nichteisenmetallen wie beispielsweise Aluminium oder Aluminiumlegierungen. Die Hauptkomponente des organischen Entlackungsmittels ist ein alkoholisches organisches Lösungsmittel. Eine besonders gute Entlackungswirkung wird dadurch erreicht, daß das Entlackungsmittel als zusätzliche Komponente alkoxylierte Alkylalkohole enthält.

In Produktionsprozessen, bei denen metallische Bauteile lackiert werden, müssen fehllackierte Teile sowie die beim Lackiervorgang eingesetzten mechanischen Hilfsmittel wie beispielsweise Gehänge regelmäßig entlackt werden. Hierfür stehen beispielsweise organische Entlacker zur Verfügung. Diese werden im Temperaturbereich von Raumtemperatur (sogenannte Kaltentlacker) bis etwa 120 °C (sogenannte Heißentlacker) eingesetzt. Am Markt eingeführte Produkte enthalten häufig als Produktbasis verschiedene Glykole, N-Methylpyrrolidon oder bei älteren Produkten auch das toxikologisch nachteilige Methylenchlorid. Als Wirkstoffe werden häufig Benzylalkohol, Furfurylalkohol und Phenoxyethanol verwendet, bei älteren Produkten auch das gesundheitlich bedenkliche Methanol. Üblicherweise enthalten die Entlacker eine Alkalikomponente wie beispielsweise Alkalimetallhydroxide oder Alkanolamine. Zusätzlich können sie Additive wie beispielsweise Korrosionsinhibitoren, Verdickungsmittel, Netzmittel, Lösevermittler und weitere enthalten.

Am Markt besteht ein beständiges Bedürfnis nach Produkten, die auch für neue, weitgehend Chemikalien-resistente Lacksysteme anwendbar sind, die kürzere Entlackungszeiten ermöglichen und die heutigen Umweltstandards entsprechen. Die vorliegende Erfindung stellt sich die Aufgabe, bisher verfügbare Produkte in der genannten Hinsicht zu verbessern.

Die Erfindung basiert auf der Erkenntnis, daß bestimmte alkoxylierte Alkylalkohole die Wirkung bisheriger Entlackungsmittel auf Basis alkoholischer organischer Lösungsmittel deutlich verbessern.

In einem ersten Aspekt betrifft die Erfindung ein Entlackungsmittel auf Basis organischer Lösungsmittel, das weniger als 5 Gew.-% Wasser und insgesamt 60 bis 98 Gew-% alkoholisches organisches Lösungsmittel sowie
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
   und erwünschtenfalls
e) 0,1 bis 20 Gew.-% weitere Additive enthält, wobei sich die Mengenanteile der Bestandteile zu 100 Gew-% addieren.

Dabei wird unter einem alkoholischen organischen Lösungsmittel ein bei Raumtemperatur flüssiges Lösungsmittel verstanden, das eine oder mehrere alkoholische OH-Gruppen trägt. Dabei kann es sich um Alkohole, vorzugsweise mit ringförmigen Substituenten, und um (Poly)glykole handeln, die einseitig verethert sein können. Beispielsweise kann das Entlackungsmittel als alkoholisches organisches Lösungsmittel eine oder mehrere Glykolverbindungen ausgewählt aus Alkylenglykol, Dialkylenglykol oder Trialkylenglykol mit jeweils 2 bis 3 C-Atomen in jeder Alkylengruppe und jeweils Monoether hiervon mit Alkoholen mit 1 bis 5 C-Atomen enthalten. Bevorzugte Beispiele hierfür sind Propyl-, Butyl- oder Pentylether von Alkylenglykolen, insbesondere von Triethylenglykol.

In einer besonderen Ausführungsform verwendet man eine Mischung zweier Komponenten als alkoholisches organisches Lösungsmittel, wobei die eine Komponente eine Glykolverbindung und die andere Komponente einen Alkohol mit einem ringförmigen Substituenten darstellt. Die Erfindung betrifft demnach speziell ein Entlackungsmittel, das
a) insgesamt 50 bis 80 Gew.-% einer oder mehrerer Glykolverbindungen ausgewählt aus Alkylenglykol, Dialkylenglykol oder Trialkylenglykol mit jeweils 2 bis 3 C-Atomen in jeder Alkylengruppe und jeweils Monoether hiervon mit Alkoholen mit 1 bis 5 C-Atomen,
b) insgesamt 10 bis 30 Gew.-% eines oder mehrere Alkohole, die mindestens einen gesättigten oder ungesättigten oder aromatischen homo- oder heterocyclischen ringförmigen Substituenten tragen,
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
   und erwünschtenfalls
e) 0,1 bis 20 Gew.-% weitere Additive enthält, wobei sich die Mengenanteile der Bestandteile zu 100 Gew-% addieren.

Dabei ist der Alkohol b) vorzugsweise ausgewählt aus Benzylalkohol, Furfurylalkohol und Phenoxyethanol. Die Glykolverbindung a) ist wieder vorzugsweise ausgewählt aus Monoethern von Alkylenglykolen, insbesondere von Trialkylenglykol mit Alkoholen mit 3 bis 5 C-Atomen. Beispielsweise kann Triethylenglykol-Butylether verwendet werden, wobei der veretherte Butylalkohol als primärer, sekundärer oder tertiärer Alkohol vorliegen kann.

Im Rahmen der vorliegenden Erfindung gilt allgemein, daß der oder die alkoxylierten Alkylalkohole c) vorzugsweise ausgewählt sind aus Ethoxylierungsprodukten linearer primärer Alkylalkohole mit 8 bis 12 C-Atomen im Alkylrest mit 2 bis 12 Ethylenoxideinheiten. Dabei liegt der Ethoxylierungsgrad vorzugsweise im Bereich von 2 bis 8, insbesondere im Bereich von 2,5 bis 6.

Die Additive e), soweit überhaupt vorhanden, können ausgewählt sein aus Korrosionsinhibitoren, Netzmitteln, Verdickungsmitteln und Lösevermitter. Als Korrosionsinhibitoren kommen insbesondere solche in Betracht, deren Wirksamkeit für Nicht-Eisen-Metalle bekannt ist. Beispielsweise genannt seien Triazine bei der Anwendung auf Buntmetallen oder Carbonsäuren mit 6 bis 11 C-Atomen, beispielsweise Octansäure, oder Octylphosphonsäure bei der Anwendung auf Aluminium oder Aluminiumlegierungen.

Außer den bereits aufgezählten Komponenten kann das Entlackungsmittel weitere Bestandteile enthalten. Dies ist jedoch in der Praxis nicht erforderlich. Daher betrifft die Erfindung insbesondere ein Entlackungsmittel, das aus
a) insgesamt 50 bis 80 Gew.-% einer oder mehrerer Glykolverbindungen ausgewählt aus Alkylenglykol, Dialkylenglykol oder Trialkylenglykol mit jeweils 2 bis 3 C-Atomen in jeder Alkylengruppe und jeweils Monoether hiervon mit Alkoholen mit 1 bis 5 C-Atomen,
b) insgesamt 10 bis 30 Gew.-% eines oder mehrere Alkohole, die mindestens einen gesättigten oder ungesättigten oder aromatischen homo- oder heterocyclischen ringförmigen Substituenten tragen,
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
   und erwünschtenfalls
e) 0,1 bis 20 Gew.-% weiteren Additiven besteht, wobei sich die Mengenanteile der Bestandteile zu 100 Gew-% addieren.

Auch die Additive e) sind nicht in jedem Fall erforderlich. Vielmehr kann das Entlackungsmittel auch im wesentlichen aus den 4 Komponenten a) bis d) bestehen. Demnach betrifft die Erfindung ebenfalls ein Entlackungsmittel, das im wesentlichen aus
a) insgesamt 50 bis 80 Gew.-% einer oder mehrerer Glykolverbindungen ausgewählt aus Alkylenglykol, Dialkylenglykol oder Trialkylenglykol mit jeweils 2 bis 3 C-Atomen in jeder Alkylengruppe und jeweils Monoether hiervon mit Alkoholen mit 1 bis 5 C-Atomen,
b) insgesamt 10 bis 30 Gew.-% eines oder mehrere Alkohole, die mindestens einen gesättigten oder ungesättigten oder aromatischen homo- oder heterocyclischen ringförmigen Substituenten tragen,
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
besteht, wobei sich die Mengenanteile zu 100 Gew.-% addieren.

Jedoch ist es hierbei nicht erforderlich, daß das Entlackungsmittel die beiden unterschiedlichen alkoholischen organischen Lösungsmittel a) und b) enthält. Vielmehr betrifft die Erfindung auch ein Entlackungsmittel, das aus insgesamt 60 bis 98 Gew-% alkoholisches organisches Lösungsmittel sowie
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
   und erwünschtenfalls
e) 0,1 bis 20 Gew.-% weitere Additive besteht, wobei sich die Mengenanteile der Bestandteile zu 100 Gew-% addieren.

Dabei stellt das alkoholische organische Lösungsmittel, wie weiter oben beschrieben, vorzugsweise ein Alkylether eines Alkylenglykols, insbesondere eines Alkylentriglykols dar. Besonders bevorzugt sind Propyl-, Butyl- oder Pentylether von Triethylenglykol. Die Additive e) sind nicht unbedingt erforderlich, so daß das Entlackungsmittel im wesentlichen aus dem alkoholischen organischen Lösungsmittel sowie den Komponenten c) und d) bestehen kann.

In einem weiteren Aspekt betrifft die Erfindung die Verwendung der vorstehend beschriebenen Entlackungsmittel zum Entlacken lackierter Bauteile aus Nicht-Eisen-Metallen, insbesondere aus Aluminium oder Aluminiumlegierungen, die zu mehr als 50 Atom-% aus Aluminium bestehen.

Weiterhin betrifft die Erfindung ein Verfahren zum Entlacken von Bauteilen aus Nichteisenmetallen, insbesondere aus Aluminium oder Aluminiumlegierungen, die zu mehr als 50 Atom-% aus Aluminium bestehen, wobei man die Bauteile mit einem der vorstehend beschriebenen Entlackungsmittel in Kontakt bringt, das eine Temperatur zwischen 20 und 130 °C, vorzugsweise zwischen 40 und 90 °C aufweist. Die Zeitdauer zum vollständigen Entlacken hängt vom Lacktyp, der Wirkstoffkonzentration im Entlackungsmittel und von dessen Temperatur ab. Sie kann zwischen wenigen Minuten, beispielsweise 5 Minuten, und mehreren Stunden, beispielsweise 10 Stunden liegen.

Die Erfindung beruht also darauf, daß durch Zusatz der beschriebenen alkoxylierten Alkylalkohole die Wirkung konventioneller organischer Entlacker deutlich gesteigert werden kann. Dies ermöglicht verkürzte Entlackungs- und damit verkürzte Produktionszyklen. Daher betrifft die Erfindung in ihrem allgemeinsten Aspekt die Verwendung von alkoxylierten Alkylalkoholen mit 8 bis 18 C-Atomen im Alkylrest und mit insgesamt 2 bis 12 Ethylenoxid- und/oder Propylenoxideinheiten pro Molekül als Additiv für Entlackungsmittel auf Basis organischer Lösungsmittel, wobei das Entlackungsmittel weniger als 5 Gew.-% Wasser enthält. Als alkoxylierte Alkylalkohole werden auch unter diesem breiten Aspekt vorzugsweise diejenigen verwendet, die vorstehend im Zusammenhang mit den unterschiedlichen Aspekten der Erfindung näher beschrieben wurden.

### Ausführungsbeispiele

Zum Testen der Entlackungswirkung wurden lackierte Aluminiumleisten eingesetzt, die mit einem Acrylat-Pulverlack mit einer Schichtstärke von etwa 120 µm beschichtet waren. Die Teile wurden ohne Bewegung in das Entlackungsmittel eingetaucht, das eine Temperatur von 70 °C aufwies. Für die Entlackungsversuche wurden teilweise unzerschnittene Originalteile verwendet, teilweise wurden die Teile in etwa 5 cm breite Streifen geschnitten. Dies beeinflußt die Entlackungswirkung. Entsprechende Angaben sowie Entlackungszeiten sind in der Tabelle enthalten.

Für die Versuche wurden folgende Vergleichsmischungen V1 und V2 sowie erfindungsgemäße Mischungen B1 und B2 verwendet. Die Zusammensetzungen sind in Gew.-% angegeben.

| V1 (Vergleichsbeispiel, Handelsprodukt) | |
|---|---|
| Butylglykol | 56 |
| N-Methylpyrrolidon | 35 |
| Monoethanolamin | 7,5 |
| KOH-Schuppen | 1,5 |

| V2 (Vergleichsbeispiel) | |
|---|---|
| Butyltriglykol | 75 |
| Benzylalkohol | 20 |
| KOH-Schuppen | 5 |

| B1 (erfindungsgemäß) | |
|---|---|
| Butyltriglykol | 96 |
| KOH-Schuppen | 2 |
| n-Octanol x 4 Ethylenoxid | 2 |

| B2 (erfindungsgemäß) | |
|---|---|
| Butyltriglykol | 70 |
| Benzylalkohol | 20 |
| KOH-Schuppen | 5 |
| n-Octanol x 4 Ethylenoxid | 5 |

| Entlackungsergebnisse: | | | |
|---|---|---|---|
| Entlacker | Teile zerschnitten? | Entlackungszeit (Minuten) | % entlackte Oberfläche |
| V1 | ja | 15 | 50 |
| B1 | ja | 15 | 75 |
| V1 | nein | 25 | 5 |
| B1 | nein | 25 | 95 |
| V2 | ja | 20 | 0 |
| B2 | ja | 20 | 90 - 98 |

## Patentansprüche

1. Entlackungsmittel auf Basis organischer Lösungsmittel, das weniger als 5 Gew.-% Wasser und insgesamt 60 bis 98 Gew-% alkoholisches organisches Lösungsmittel sowie
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
und erwünschtenfalls
e) 0,1 bis 20 Gew.-% weitere Additive enthält, wobei sich die Mengenanteile der Bestandteile zu 100 Gew-% addieren.

2. Entlackungsmittel nach Anspruch 1, **dadurch gekennzeichnet, dass** es als alkoholisches organisches Lösungsmittel
a) eine oder mehrere Glykolverbindungen ausgewählt aus Alkylenglykol, Dialkylenglykol oder Trialkylenglykol mit jeweils 2 bis 3 C-Atomen in jeder Alkylengruppe und jeweils Monoether hiervon mit Alkoholen mit 1 bis 5 C-Atomen enthält.

3. Entlackungsmittel nach Anspruch 1, **dadurch gekennzeichnet, dass** es
a) insgesamt 50 bis 80 Gew.-% einer oder mehrerer Glykolverbindungen ausgewählt aus Alkylenglykol, Dialkylenglykol oder Trialkylenglykol mit jeweils 2 bis 3 C-Atomen in jeder Alkylengruppe und jeweils Monoether hiervon mit Alkoholen mit 1 bis 5 C-Atomen,
b) insgesamt 10 bis 30 Gew.-% eines oder mehrere Alkohole, die mindestens einen gesättigten oder ungesättigten oder aromatischen homo- oder heterocyclischen ringförmigen Substituenten tragen,
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
und erwünschtenfalls
e) 0,1 bis 20 Gew.-% weitere Additive enthält, wobei sich die Mengenanteile der Bestandteile zu 100 Gew-% addieren.

4. Entlackungsmittel nach Anspruch 3, **dadurch gekennzeichnet, dass** der Alkohol b) ausgewählt ist aus Benzylalkohol, Furfurylalkohol und Phenoxyethanol.

5. Entlackungsmittel nach einem oder mehreren der Ansprüche 2 bis 4, **dadurch gekennzeichnet, dass** es eine oder mehrere Glykolverbindungen a) enthält, die ausgewählt sind aus Trialkylenglykol-monoether mit Alkoholen mit 3 bis 5 C-Atomen.

6. Entlackungsmittel nach einem oder mehreren der Ansprüche 1 bis 5, **dadurch gekennzeichnet, dass** der oder die alkoxylierten Alkylalkohole c) ausgewählt sind aus Ethoxylierungsprodukten linearer primärerer Alkylalkohole mit 8 bis 12 C-Atomen im Alkylrest mit 2 bis 12 Ethylenoxideinheiten.

7. Entlackungsmittel nach einem oder mehreren der Ansprüche 1 bis 6, **dadurch gekennzeichnet, dass** die weiteren Additive e) ausgewählt sind aus Korrosionsinhibitoren, Netzmitteln, Verdickungsmitteln und Lösevermittler.

8. Entlackungsmittel nach einem oder mehreren der Ansprüche 3 bis 7, **dadurch gekennzeichnet, dass** es aus
a) insgesamt 50 bis 80 Gew.-% einer oder mehrerer Glykolverbindungen ausgewählt aus Alkylenglykol, Dialkylenglykol oder Trialkylenglykol mit jeweils 2 bis 3 C-Atomen in jeder Alkylengruppe und jeweils Monoether hiervon mit Alkoholen mit 1 bis 5 C-Atomen,
b) insgesamt 10 bis 30 Gew.-% eines oder mehrere Alkohole, die mindestens einen gesättigten oder ungesättigten oder aromatischen homo- oder heterocyclischen ringförmigen Substituenten tragen,
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
und erwünschtenfalls
e) 0,1 bis 20 Gew.-% weiteren Additiven besteht, wobei sich die Mengenanteile der Bestandteile zu 100 Gew-% addieren.

9. Entlackungsmittel nach einem oder mehreren der Ansprüche 3 bis 6, **dadurch gekennzeichnet, dass** es aus
a) insgesamt 50 bis 80 Gew.-% einer oder mehrerer Glykolverbindungen ausgewählt aus Alkylenglykol, Dialkylenglykol oder Trialkylenglykol mit jeweils 2 bis 3 C-Atomen in jeder Alkylengruppe und jeweils Monoether hiervon mit Alkoholen mit 1 bis 5 C-Atomen,
b) insgesamt 10 bis 30 Gew.-% eines oder mehrere Alkohole, die mindestens einen gesättigten oder ungesättigten oder aromatischen homo- oder heterocyclischen ringförmigen Substituenten tragen,
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
besteht, wobei sich die Mengenanteile zu 100 Gew.-% addieren.

10. Entlackungsmittel nach einem oder beiden der Ansprüche 1 und 2, **dadurch gekennzeichnet, dass** es aus
insgesamt 60 bis 98 Gew-% alkoholisches organisches Lösungsmittel sowie
c) insgesamt 1 bis 20 Gew.-% eines oder mehrerer alkoxylierter Alkylalkohole mit 8 bis 18 C-Atomen im Alkylrest und mit insgesamt 2 bis 12 Ethylenoxid- und/oder Propylenoxideinheiten pro Molekül,
d) 1 bis 10 Gew.% Alkalisierungsmittel ausgewählt aus Alkalimetallhydroxiden und Alkanolaminen,
und erwünschtenfalls
e) 0,1 bis 20 Gew.-% weitere Additive besteht, wobei sich die Mengenanteile der Bestandteile zu 100 Gew-% addieren.

11. Verwendung eines Entlackungsmittels nach einem oder mehreren der Ansprüche 1 bis 10 zum Entlacken lackierter Bauteile aus Nichteisenmetallen, insbesondere aus Aluminium oder Aluminiumlegierungen, die zu mehr als 50 Atom-% aus Aluminium bestehen.

12. Verfahren zum Entlacken von Bauteilen aus Nichteisenmetallen, insbesondere aus Aluminium oder Aluminiumlegierungen, die zu mehr als 50 Atom-% aus Aluminium bestehen, wobei man die Bauteile mit einem Entlackungsmittel nach einem oder mehreren der Ansprüche 1 bis 10 in Kontakt bringt, das eine Temperatur zwischen 20 und 130 °C, vorzugsweise zwischen 40 und 90 °C aufweist.

13. Verwendung von alkoxylierten Alkylalkoholen mit 8 bis 18 C-Atomen im Alkylrest und mit insgesamt 2 bis 12 Ethylenoxid- und/oder Propylenoxideinheiten pro Molekül als Additiv für Entlackungsmittel auf Basis organischer Lösungsmittel, wobei das Entlackungsmittel weniger als 5 Gew.-% Wasser enthält.
